# EUROPEAN PATENT APPLICATION

(11) **EP 4 786 039 A1**
(43) Date of publication of application: **05.08.2026**
(21) Application number: 24921191.3
(22) Date of filing: 23.04.2024
(51) Int. Cl.: B01F 33/80, B01F 23/70, B03C 1/30, B05C 11/00, B01F 101/36

(54) **BATTERY SLURRY PRODUCTION SYSTEM**

(30) Priority: 29.01.2024 CN 202420209345 U
(71) Applicant: Contemporary Amperex Technology Co., Limited, Ningde, Fujian 352100 (CN)
(72) Inventor: QIU, Xin, Ningde, Fujian 352100 (CN); XU, Liyong, Ningde, Fujian 352100 (CN); HAN, Yang, Ningde, Fujian 352100 (CN); LI, Yuanxin, Ningde, Fujian 352100 (CN)
(74) Representative: Ran, Handong
(86) International application number: PCT/CN2024/089309
(87) International publication number: WO 2025/161147

(57) **Abstract**

A battery slurry production system, comprising a main-material feeding system (1), an auxiliary-material feeding system (2), a mixing bin (40) and a slurrying machine (50), wherein the mixing bin (40) is configured to receive a main material and an auxiliary material and mix the main material with the auxiliary material; an input end of the slurrying machine (50) is in communication with an input end of the mixing bin (40), and is configured to generate a battery slurry from a mixture of the main material and the auxiliary material and a solvent; and at least one of the main-material feeding system (1) and the auxiliary-material feeding system (2) is provided with a filter unit (7).

## Description

### CROSS-REFERENCE TO RELATED APPLICATIONS

This disclosure is based on a Chinese patent application with application number 202420209345.7, filing date of January 29, 2024, and utility model title "BATTERY SLURRY PRODUCTION SYSTEM", and claims the priority of this Chinese patent application, the entire contents of which are incorporated into this disclosure by reference.

### TECHNICAL FIELD

This disclosure relates to the field of battery technology, particularly to a battery slurry production system.

### BACKGROUND

The application of new energy batteries in life and industry is becoming increasingly widespread, for example, new energy vehicles equipped with batteries have been widely used, and in addition, batteries are being increasingly applied in energy storage fields and the like.

Battery cells are widely used in various electronic devices, and the electrode plates of battery cells include current collectors and active material layers applied to the surfaces of the current collectors. The active material layers are formed by drying active material slurry, and the active material slurry includes powdery active materials as well as solvents, binders, and the like. The above materials are mixed well to form the active material slurry. Battery slurry can be produced and conveyed through a battery slurry production system.

In the battery slurry production system in the related art, multiple filtering devices are provided in the conveying process from the completion of battery slurry production to the coating die head to filter large particle impurities and metal impurities in the battery slurry to obtain qualified battery slurry. However, the filtering of the battery slurry is entirely concentrated in the conveying stage, resulting in high filtering pressure and great filtering difficulty.

### SUMMARY OF THE UTILITY MODEL

In order to solve the above technical problems, this disclosure provides a battery slurry production system that starts filtering impurities during the conveying process of main materials and/or auxiliary materials, reduces the impurity content in the produced battery slurry, reduces the filtering pressure in the conveying stage, and increases the qualification rate of the battery slurry.

This disclosure is implemented through the following technical solutions.

A first aspect of this disclosure provides a battery slurry production system, including:
a main material feeding system configured to store and convey main materials, where the main materials include active materials, and the active materials are battery positive electrode active materials or battery negative electrode active materials;
an auxiliary material feeding system configured to store and convey auxiliary materials, where the auxiliary materials include binders and conductive agents;
a mixing bin, an input end of the mixing bin being in communication with both an output end of the main material feeding system and an output end of the auxiliary material feeding system, and being configured to receive the main materials and the auxiliary materials, and to mix the main materials and the auxiliary materials; and
a slurry making machine, an input end of the slurry making machine being in communication with the output end of the mixing bin, and being configured to generate a battery slurry from a mixture of the main materials and the auxiliary materials and a solvent;
where at least one of the main material feeding system and the auxiliary material feeding system is provided with a filtering unit.

In the technical solution of the embodiments of this disclosure, by providing a filtering unit in at least one of the main material feeding system and the auxiliary material feeding system, the filtering unit filters impurities mixed in the production process of the main materials and/or auxiliary materials before they enter the mixing bin, allowing for low impurity content in the main materials and/or auxiliary materials entering the slurry making machine, such that the qualification rate of the battery slurry prepared by the slurry making machine is also relatively high, the filtering pressure and filtering difficulty during downstream battery slurry conveying are reduced, the qualification rate of the battery slurry is increased, and the safety performance of the battery is improved.

In some implementations, the main material feeding system includes a main material feeder, a main material conveying pipe, and a main material storage bin, the filtering unit includes a first filtering unit, the main material feeder is configured to convey the main materials to the main material storage bin via the main material conveying pipe, and the first filtering unit is provided between the main material feeder and the main material conveying pipe.

In the technical solution of the embodiments of this disclosure, the arrangement of the first filtering unit filters the main materials before the main materials enter the main material conveying pipe, increases the purity of the main materials entering the main material conveying pipe and the main material storage bin, and reduces the probability that impurities mixed in the main materials enter the main material conveying pipe and the main material storage bin to affect the purity of the main materials, so that the main materials have relatively high purity during the conveying process, increasing the qualification rate of the battery slurry prepared by the slurry making machine.

In some implementations, the main material feeder includes a rotary valve, and an inner wall of the rotary valve is provided with a non-metal protective layer, where the non-metal protective layer includes silicon carbide material; and the main material conveying pipe is made of stainless steel material, and an inner wall of the main material conveying pipe is provided with an alumina ceramic ring.

In the technical solution of the embodiments of this disclosure, the inner wall of the rotary valve is provided with a non-metal protective layer, and the inner wall of the main material conveying pipe is provided with an alumina ceramic ring. When the main materials pass through the rotary valve and the main material conveying pipe, the non-metal protective layer isolates the main materials from the metal substances of the rotary valve, and the alumina ceramic ring isolates the main materials from the metal substances of the main material conveying pipe. In this way, during the process that the main materials are conveyed to the main material storage bin after impurity filtering by the first filtering unit, no new impurities are added, thereby ensuring the purity of the main materials in the main material storage bin and increasing the production qualification rate of the battery slurry.

In some implementations, the first filtering unit includes an iron remover.

In the technical solution of the embodiments of this disclosure, the iron remover is a structure capable of generating strong magnetic field attraction, which can remove magnetic impurities and metal impurities mixed in the main materials to increase the purity of the main materials.

In some implementations, the auxiliary material feeding system includes an auxiliary material feeder, an auxiliary material conveying pipe, and an auxiliary material storage bin, the filtering unit includes a second filtering unit, the auxiliary material feeder is configured to convey auxiliary materials to the auxiliary material storage bin via the auxiliary material conveying pipe, and the second filtering unit is provided between the auxiliary material feeder and the auxiliary material conveying pipe.

In the technical solution of the embodiments of this disclosure, the arrangement of the second filtering unit filters the auxiliary materials before the auxiliary materials enter the auxiliary material conveying pipe, increases the purity of the auxiliary materials entering the auxiliary material conveying pipe and the auxiliary material storage bin, and reduces the probability that impurities mixed in the auxiliary materials enter the auxiliary material conveying pipe and the auxiliary material storage bin to affect the purity of the auxiliary materials, so that the auxiliary materials have relatively high purity during the conveying process, increasing the qualification rate of the battery slurry prepared by the slurry making machine.

In some implementations, the auxiliary material feeder includes a suction gun, and an outer surface of the suction gun is provided with a non-metal protective layer, where the non-metal protective layer includes Teflon material; and the auxiliary material conveying pipe is made of stainless steel material, and an inner wall of the auxiliary material conveying pipe is provided with a polyethylene sintered tube.

In the technical solution of the embodiments of this disclosure, the outer surface of the suction gun is provided with a non-metal protective layer, and the inner wall of the auxiliary material conveying pipe is provided with a polyethylene sintered tube. When the auxiliary materials pass through the suction gun and the auxiliary material conveying pipe, the non-metal protective layer isolates the auxiliary materials from the metal substances of the suction gun, and the polyethylene sintered tube isolates the auxiliary materials from the metal substances of the auxiliary material conveying pipe. In this way, during the process that the auxiliary materials are conveyed to the auxiliary material storage bin after impurity filtering by the second filtering unit, no new impurities are added, thereby ensuring the purity of the auxiliary materials in the auxiliary material storage bin and increasing the production qualification rate of the battery slurry.

In some implementations, the second filtering unit includes a filter screen, and the filter screen is provided on the suction gun.

In the technical solution of the embodiments of this disclosure, the filter screen can remove particle agglomerates mixed in the auxiliary materials to increase the purity of the auxiliary materials. The filter screen is provided on the suction gun, specifically, it can be provided at the suction port of the suction gun to filter impurities in the auxiliary materials during suction.

In some implementations, the battery slurry production system includes a solvent feeding system, the solvent feeding system is configured to store and convey the solvent, an output end of the solvent feeding system is in communication with an input end of the slurry making machine, and the solvent feeding system is provided with a third filtering unit.

In the technical solution of the embodiments of this disclosure, before the solvent enters the slurry making machine, the third filtering unit filters impurities mixed in the solvent, so that the impurity content in the solvent entering the slurry making machine is low, thereby the qualification rate of the battery slurry prepared by the slurry making machine is also relatively high, the filtering pressure and filtering difficulty during downstream battery slurry conveying are reduced, the qualification rate of the battery slurry is increased, and the safety performance of the battery is improved.

In some implementations, the solvent feeding system includes a solvent storage bin and a solvent feeder, the solvent feeder is configured to convey solvents to the solvent storage bin, and the third filtering unit is provided between the solvent storage bin and the solvent feeder.

In the technical solution of the embodiments of this disclosure, the third filtering unit filters impurities mixed in the solvent itself when the solvent enters the solvent storage bin, and increases the purity of the solvent entering the solvent storage bin, so that the solvent has relatively high purity in the slurry making machine, and increases the qualification rate of the battery slurry prepared by the slurry making machine.

In some implementations, the third filtering unit is a wound filter having a filtration rating of 0.22 µm to 75 µm.

In the technical solution of the embodiments of this disclosure, when the solvent contacts the outer surface of the wound filter, the particle impurities mixed therein are blocked outside the wound filter to increase the purity of the solvent.

In some implementations, the slurry making machine includes a driving mechanism and a stirring mechanism, the driving mechanism is configured to drive the stirring mechanism to rotate, and the driving mechanism and the stirring mechanism are made of non-metal materials, or the driving mechanism and the stirring mechanism are made of metal materials and provided with a non-metal protective layer, where the metal materials include aluminum alloy materials, and the non-metal protective layer includes silicon carbide materials.

In the technical solution of the embodiments of this disclosure, the driving mechanism and the stirring mechanism are made of non-metal materials, which can reduce the probability of metal impurities being mixed during the battery slurry production process, so that the qualification rate of the produced battery slurry is high, and the filtering pressure in the downstream battery slurry conveying process is reduced. The driving mechanism and the stirring mechanism are made of metal materials and provided with a non-metal protective layer. During the battery slurry production process, the non-metal protective layer isolates the battery slurry from the metal substances. In this way, after the battery slurry is prepared in the slurry making machine, no new impurities are added, and the qualification rate of the battery slurry is high.

In some implementations, the battery slurry production system includes a coating buffer tank, an outlet end of the coating buffer tank is connected to a coating die head, the coating die head is configured to apply the slurry to electrode plates of batteries, and at least a fourth filtering unit is provided between the coating buffer tank and the slurry making machine.

In the technical solution of the embodiments of this disclosure, during the conveying process of the battery slurry, the fourth filtering unit filters particle agglomerates mixed in the battery slurry to remove large particle impurities in the battery slurry, and increases the qualification rate of the battery slurry, and after the main materials, auxiliary materials, and solvents are all filtered, the filtering pressure of the battery slurry during the conveying process is low, and the conveying efficiency can also be increased.

In some implementations, the fourth filtering unit is a wound filter having a filtration rating of 100 µm to 150 µm.

In the technical solution of the embodiments of this disclosure, when the battery slurry contacts the outer surface of the wound filter, the particle impurities mixed therein are blocked outside the wound filter to increase the purity of the solvent.

In some implementations, the battery slurry production system includes a first transfer tank and a fifth filtering unit, the first transfer tank is provided between the fourth filtering unit and the fifth filtering unit, and the coating buffer tank is provided downstream of the fifth filtering unit along a conveying direction of the battery slurry.

In the technical solution of the embodiments of this disclosure, the first transfer tank can increase the storage capacity for the battery slurry during the conveying process of the battery slurry, and the fifth filtering unit can further filter impurities mixed in the battery slurry again, increasing the filtering effect of the battery slurry, thereby increasing the coating reliability.

In some implementations, the battery slurry production system includes a second transfer tank and a sixth filtering unit, the second transfer tank is provided between the fifth filtering unit and the sixth filtering unit, and the coating buffer tank is connected to an outlet end of the sixth filtering unit.

In the technical solution of the embodiments of this disclosure, the second transfer tank can increase the storage capacity for the battery slurry during the conveying process of the battery slurry, and the sixth filtering unit can remove impurities from the battery slurry again, that is, during the conveying process of the battery slurry, the battery slurry undergoes at least three filtrations, the purity of the battery slurry is high, and the safety performance of the battery is increased.

In some implementations, the fifth filtering unit includes an iron remover; and/or the sixth filtering unit includes an iron remover.

In the technical solution of the embodiments of this disclosure, before the battery slurry is conveyed to the coating buffer tank, the fifth filtering unit and the sixth filtering unit filter possible magnetic impurities and metal impurities mixed in the battery slurry, so that the battery slurry entering the coating buffer tank contains no or almost no impurities.

### BRIEF DESCRIPTION OF DRAWINGS

By reading the detailed description of the preferred embodiments below, various other advantages and benefits will become clear to those of ordinary skill in the art. The drawings are only for the purpose of illustrating the preferred embodiments and are not considered to limit this disclosure. Moreover, the same reference numerals denote the same components in all the drawings. In the drawings:

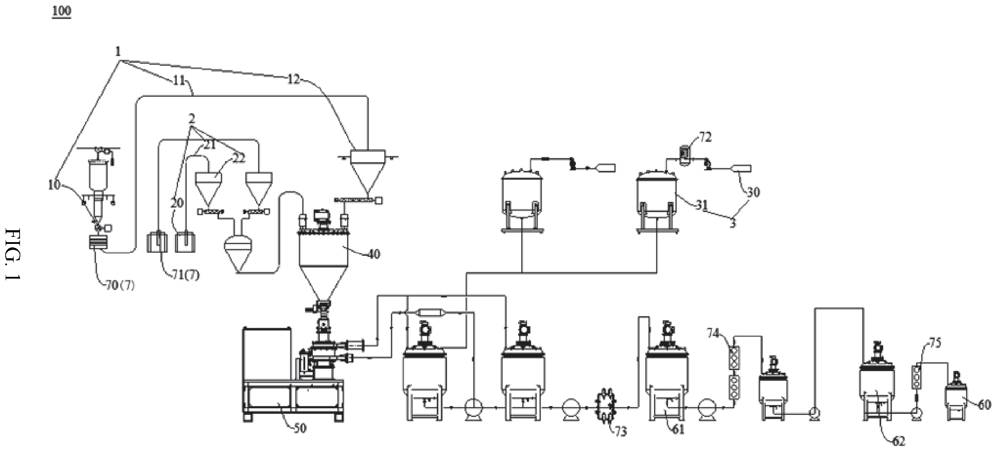

FIG. 1 is a schematic structural diagram of a battery slurry production system provided in some embodiments of this disclosure.

Description of reference numerals in the drawings
100-battery slurry production system;
1-main material feeding system; 10-main material feeder; 11-main material conveying pipe; 12-main material storage bin; 2-auxiliary material feeding system; 20-auxiliary material feeder; 21-auxiliary material conveying pipe; 22-auxiliary material storage bin; 3-solvent feeding system; 30-solvent feeder; 31-solvent storage bin; 40-mixing bin; 50-slurry making machine; 60-coating buffer tank; 61-first transfer tank; 62-second transfer tank; 7-filtering unit; 70-first filtering unit; 71-second filtering unit; 72-third filtering unit; 73-fourth filtering unit; 74-fifth filtering unit; and 75-sixth filtering unit.

### DESCRIPTION OF EMBODIMENTS

The embodiments of the technical solutions of this disclosure will now be described in detail in conjunction with the accompanying drawings. The following embodiments are only used to illustrate the technical solutions of this disclosure more clearly, and thus are only exemplary and cannot be used to limit the protection scope of this disclosure.

Unless otherwise defined, all technical and scientific terms used herein have the same meaning as commonly understood by those skilled in the technical field in the art to which this disclosure belongs; the terms used herein are only for the purpose of describing specific embodiments and are not intended to limit this disclosure; and the terms "include" and "have" and any variations thereof in this document are intended to cover non-exclusive inclusions.

In the description of the embodiments of this disclosure, technical terms such as "first", "second", and "third" are only used to distinguish different objects and should not be understood as indicating or implying relative importance or implicitly indicating the number, specific order or primary-secondary relationship of the indicated technical features. In the description of the embodiments of this disclosure, the meaning of "multiple" is two or more, unless otherwise clearly and specifically limited.

The mention of "embodiment" in this document means that specific features, structures or characteristics described in conjunction with the embodiment can be included in at least one embodiment of this disclosure. The appearance of this phrase in various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

In the description of the embodiments of this disclosure, the term "and/or" is merely an association describing associated objects, indicating that three relationships can exist, for example, A and/or B can indicate: A exists alone, A and B exist simultaneously, and B exists alone. In addition, the character "/" in this document generally indicates that the associated objects before and after are in an "or" relationship.

In the description of the embodiments of this disclosure, the orientation or positional relationship indicated by technical terms such as "length", "width", "thickness", "upper", "lower", "front", "rear", "left", "right", "vertical", "horizontal", "top", "bottom", "inner", "outer", or "circumferential" is based on the orientation or positional relationship shown in the drawings, and is only for the convenience of describing the embodiments of this disclosure and simplifying the description, rather than indicating or implying that the referred means or element must have a specific orientation, be constructed and operated in a specific orientation, and therefore should not be understood as limiting the embodiments of this disclosure.

In the description of the embodiments of this disclosure, unless otherwise clearly specified and limited, technical terms such as "mounting", "connecting", "join", and "fixing" should be understood in a broad sense, for example, it may be a fixed connection or a detachable connection, or an integrated connection; it may be a mechanical connection or an electrical connection; or it may be a direct connection, an indirect connection through an intermediate medium, or internal communication between two components or the interaction relationship between two elements. Those of ordinary skill in the art can understand the specific meanings of the above terms in the embodiments of this disclosure based on the specific circumstances.

In the description of the embodiments of this disclosure, unless otherwise clearly specified and limited, the technical term "contact" should be understood in a broad sense, which can be direct contact or contact through an intermediate medium layer, it can be contact between two objects in contact with basically no interaction force, or contact between two objects in contact with interaction force.

Below, this disclosure is described in detail.

At present, the application of new energy batteries in life and industry is becoming increasingly widespread. New energy batteries are not only applied in energy storage power systems such as hydroelectric, thermal, wind and solar power stations, but also widely used in electric bicycles, electric motorcycles, electric vehicles and other electric vehicles, as well as in multiple fields such as aerospace. With the continuous expansion of the application fields of traction batteries, their market demand is also continuously increasing.

Batteries include multiple battery cells, and the multiple battery cells are connected through series, parallel or hybrid connections, where hybrid connection means that there are both series and parallel connections among multiple battery cells. A battery cell refers to the smallest independent unit that can be charged and discharged independently. The battery cell can be a secondary battery, and the secondary battery refers to a battery cell that can continue to be used by activating the active materials through charging after the battery cell is discharged. The battery cell can be a lithium-ion battery, sodium-ion battery, sodium-lithium-ion battery, lithium metal battery, sodium metal battery, lithium-sulfur battery, magnesium-ion battery, nickel-metal hydride battery, nickel-cadmium battery, lead-acid battery, or the like, and the embodiments of this disclosure do not limit this.

Battery cells include electrode plates, separators, electrolytes, and the like. Electrode plates include current collectors and active material layers applied to the surfaces of the current collectors. The active material layers are formed by drying active material slurry, and the active material slurry includes powdery active materials as well as solvents, binders, and the like. The above materials are mixed well to form the active material slurry. Battery slurry can be produced and conveyed through a battery slurry production system.

It can be understood that battery active materials are mostly obtained through mineral purification, and their preparation adopts a sintering process, which inevitably introduces some magnetic impurities. Moreover, during the production process of battery slurry, wear of the slurry making machine and friction between equipment components may introduce magnetic impurities and metal impurities into the battery slurry, thereby causing excessive self-discharge of the battery, which may lead to battery short circuit and thus trigger battery safety problems, affecting battery performance. In addition, bubbles and particle agglomerates are inevitably generated during the battery slurry production process, which cause impurity particles, scratches, foil breakage, belt scraping and other phenomena on the surface of the electrode plates during coating of the electrode plates, thereby affecting the safety performance of the battery.

The battery slurry production system used in the related art is provided with multiple filtering devices in the conveying process from the completion of battery slurry production to the coating die head to filter large particle impurities and metal impurities in the battery slurry to obtain qualified battery slurry.

The inventors of this disclosure have noticed that in the battery slurry production system used in the related art, the filtering of the battery slurry is entirely concentrated in the conveying stage, resulting in high filtering pressure and great filtering difficulty.

Based on the above considerations, in order to reduce the filtering pressure in the battery slurry conveying stage and increase the qualification rate of the battery slurry, the embodiments of this disclosure provide a battery slurry production system 100.

Referring to FIG. 1, the battery slurry production system 100 includes a main material feeding system 1, an auxiliary material feeding system 2, a mixing bin 40, and a slurry making machine 50.

The main material feeding system 1 is configured to store and convey main materials, where the main materials include active materials, and the active materials are battery positive electrode active materials or battery negative electrode active materials.

The auxiliary material feeding system 2 is configured to store and convey auxiliary materials, where the auxiliary materials include binders and conductive agents.

An input end of the mixing bin 40 is in communication with both an output end of the main material feeding system 1 and an output end of the auxiliary material feeding system 2, and is configured to receive main materials and auxiliary materials, and to mix the main materials and the auxiliary materials.

An input end of the slurry making machine 50 is in communication with an output end of the mixing bin 40, and is configured to generate battery slurry from a mixture of the main materials and the auxiliary materials and a solvent.

At least one of the main material feeding system 1 and the auxiliary material feeding system 2 is provided with a filtering unit 7.

Main materials refer to powdery materials that account for a large proportion in the battery slurry. The positive electrode active material itself has a high potential, the negative electrode active material itself has a low potential, and the two form a large potential difference to obtain cells with a relatively high energy density. The positive electrode active material can be one or more of transition metal oxides of lithium, such as lithium cobalt oxide or lithium iron phosphate. The negative electrode active material can be one or more of carbonaceous materials, such as graphite, coke, carbon fiber, or carbon black.

The main materials can be contained in a main material powder bag, unpacked, stored and conveyed to the mixing bin 40 through the main material feeding system 1. The main material powder bag is a bulk container containing main materials to be transported, the bulk container can be a ton bag, and the ton bag can also be called a container bag or woven bag. The ton bag can be made of polypropylene fiber, with characteristics of high strength, wear resistance, waterproof and moisture-proof, easy loading and unloading, or the like. The ton bag can be in a rectangular parallelepiped shape, and when it is necessary to unload the main materials, one or more openings can be provided on the surface of the ton bag to unload the main materials.

The main material feeding system 1 can automatically unpack the main material powder bag and convey the main materials, that is, the main material powder bag does not need manual opening. In this way, the automation degree of unpacking the main material powder bag is improved, the unpacking efficiency is increased, the manpower consumption for unpacking the main material powder bag is reduced, and the probability of workers directly contacting the main materials during the operation process is reduced, which otherwise would affect physical health.

Exemplarily, the main material feeding system 1 can include a suspension assembly and an unpacking assembly. Workers only need to hang the main material powder bag on the suspension assembly, and the suspension assembly transports the main material powder bag to a preset position. The unpacking assembly is configured to destroy the main material powder bag at the preset position, so that manual unpacking of the main material powder bag is not required.

Auxiliary materials refer to powdery materials that account for a small proportion in the battery slurry. The binder is used to bind and maintain the battery positive electrode active substances and battery negative electrode active substances, and to increase the contact between the battery positive electrode active materials, battery negative electrode active materials and conductive agents, and the electronic contact between the battery positive electrode active materials, battery negative electrode active materials and the current collector. The conductive agent is used to improve the electrical conductivity and charge-discharge performance of the battery, and to improve the safety and cycle life of the battery. The binder can be one or more of polyvinyl alcohol binder, polyacrylate binder, epoxy resin binder, vinyl acetate resin binder, or the like. The conductive agent can be one or more of conductive carbon black, superconducting carbon black, graphite conductive agent, carbon powder, or the like.

The auxiliary materials can be contained in an auxiliary material powder bag, unpacked, stored and conveyed to the mixing bin 40 through the auxiliary material feeding system 2. The shape and unpacking method of the auxiliary material powder bag can refer to the description of the above main material powder bag, which will not be repeated here.

The mixing bin 40 is configured to mix the main materials and the auxiliary materials, so that the main materials and the auxiliary materials can be uniformly distributed in the mixing bin 40. In this way, when the slurry making machine 50 receives the mixture of the main materials and the auxiliary materials, the main materials and the auxiliary materials can also be uniformly distributed in the slurry making machine 50, increasing the slurry making efficiency of the slurry making machine 50.

Exemplarily, the battery slurry production system 100 can include a mixing mechanism, and the mixing mechanism is disposed in the mixing bin 40 to mix the main materials and the auxiliary materials in the mixing bin 40. Specifically, the mixing mechanism is a mechanism capable of mixing the main materials and the auxiliary materials in the mixing bin 40 to make the main materials and the auxiliary materials uniformly distributed. The mixing mechanism can include a stirring device at least partially provided in the mixing bin 40. The stirring device can stir the main materials and the auxiliary materials in the mixing bin 40 by self-rotation, break up lumps formed by deposition of the main materials and the auxiliary materials, and make the main materials and the auxiliary materials mix uniformly. The stirring device can include stirring paddles, stirring rods, and the like. Certainly, in other examples, the mixing mechanism can also include a rotation mechanism provided outside the mixing bin 40, and the rotation mechanism drives the mixing bin 40 to rotate, so that the main materials and the auxiliary materials in the mixing bin 40 are mixed well under the rotation.

Certainly, the mixing mechanism can also include a vibrator and an air butterfly to generate vibration so that the main materials and the auxiliary materials in the mixing bin 40 are fully mixed.

Certainly, the battery slurry production system 100 can also include a weighing device and a pressure sensor, and the weighing device and the pressure sensor are provided in the mixing bin 40 to monitor the weight of the mixture of the main materials and the auxiliary materials, so that the difference between the weight of the mixture of the main materials and the auxiliary materials and the target weight is maintained within a reasonable range, facilitating slurry making. The target weight refers to the sum of the weights of the main materials and the auxiliary materials that the mixing bin 40 needs to provide to the slurry making machine 50 in a single time.

The slurry making machine 50 is configured to stir the mixture of the main materials and the auxiliary materials with a solvent to obtain battery slurry.

The solvent can be one or more of water and organic solvents. For example, the solvent can be one or more of water, heterocyclic compounds, and ketone compounds.

The filtering unit 7 refers to a structure capable of filtering magnetic impurities, metal impurities, and particle agglomerates.

At least one of the main material feeding system 1 and the auxiliary material feeding system 2 described above is provided with a filtering unit 7, including three cases.

First case: the main material feeding system 1 is provided with a filtering unit 7. The filtering unit 7 filters impurities mixed during the transportation of the main materials, so that the impurities in the main materials entering the mixing bin 40 are fewer, reducing the impact of impurities in the main materials themselves on the qualification of the battery slurry, thereby reducing the content of magnetic impurities, metal impurities or particle agglomerates in the battery slurry prepared by the slurry making machine 50. This reduces the filtering pressure during the conveying process of the battery slurry, further improving the filtering effect of the battery slurry, and increasing the production qualification degree of the battery slurry, thereby reducing the safety performance of the battery.

Second case: the auxiliary material feeding system 2 is provided with a filtering unit 7. The filtering unit 7 filters impurities mixed during the transportation of the auxiliary materials, so that the impurities in the auxiliary materials entering the mixing bin 40 are fewer, reducing the impact of impurities in the auxiliary materials themselves on the qualification degree of the battery slurry, thereby reducing the content of magnetic impurities, metal impurities or particle agglomerates in the battery slurry prepared by the slurry making machine 50. This reduces the filtering pressure during the conveying process of the battery slurry, further improving the filtering effect of the battery slurry, and increasing the production qualification degree of the battery slurry, thereby reducing the safety performance of the battery.

Third case: both the main material feeding system 1 and the auxiliary material feeding system 2 are provided with a filtering unit 7. The filtering unit 7 filters metal impurities, magnetic impurities, and particle agglomerates mixed during the transportation of the main materials and the auxiliary materials, so that the impurities in the main materials and the auxiliary materials entering the mixing bin 40 are fewer, reducing the impact of impurities in the main materials and auxiliary materials themselves on the qualification degree of the battery slurry, further reducing the content of magnetic impurities, metal impurities or particle agglomerates in the battery slurry prepared by the slurry making machine 50, reducing the filtering pressure during the conveying process of the battery slurry, further improving the filtering effect of the battery slurry, and increasing the production qualification degree of the battery slurry, thereby increasing the safety performance of the battery.

The battery slurry production system 100 provided by the embodiments of this disclosure, by providing a filtering unit 7 in at least one of the main material feeding system 1 and the auxiliary material feeding system 2, filters impurities mixed during the transportation of the main materials and/or auxiliary materials by the filtering unit 7 before they enter the mixing bin 40, so that the impurity content in the main materials and/or auxiliary materials entering the slurry making machine 50 is low, thereby the qualification rate of the battery slurry prepared by the slurry making machine 50 is also relatively high, the filtering pressure and filtering difficulty during downstream battery slurry conveying are reduced, the qualification rate of the battery slurry is increased, and the safety performance of the battery is improved.

In some embodiments, the main material feeding system 1 includes a main material feeder 10, a main material conveying pipe 11, and a main material storage bin 12. The filtering unit 7 includes a first filtering unit 70. The main material feeder 10 is configured to convey the main materials to the main material storage bin 12 via the main material conveying pipe 11, and the first filtering unit 70 is provided between the main material feeder 10 and the main material conveying pipe 11.

Specifically, after the main material powder bag is unpacked, the main materials in the main material powder bag can be conveyed to the main material storage bin 12 for storage through the main material feeder 10 via the main material conveying pipe 11. The first filtering unit 70 filters impurities mixed in the main materials themselves before the main materials enter the main material conveying pipe 11, so that the impurity content in the main materials entering the main material storage bin 12 is low.

In this embodiment, the arrangement of the first filtering unit 70 filters the main materials before the main materials enter the main material conveying pipe 11, increases the purity of the main materials entering the main material conveying pipe 11 and the main material storage bin 12, and reduces the probability that impurities mixed in the main materials enter the main material conveying pipe 11 and the main material storage bin 12 to affect the purity of the main materials, so that the main materials have relatively high purity during the conveying process, increasing the qualification rate of the battery slurry prepared by the slurry making machine 50.

Certainly, in some other embodiments, the first filtering unit 70 can also be provided between the main material storage bin 12 and the main material conveying pipe 11, or between the main material storage bin 12 and the mixing bin 40. In still some other embodiments, structures having filtering functions can be provided on at least two of the following connections: between the main material feeder 10 and the main material conveying pipe 11, between the main material storage bin 12 and the main material conveying pipe 11, and between the main material storage bin 12 and the mixing bin 40, further improving the purity of the main materials.

It can be understood that the manner in which the main materials enter the main material storage bin 12 via the main material conveying pipe 11 is not limited.

For example, the main material feeding system 1 can include a fan and the fan is configured to generate negative pressure in the main material conveying pipe 11, so that the main materials enter the main material storage bin 12 under the negative pressure. The fan can be a Roots blower or other structures capable of generating negative pressure.

The specific structure of the main material feeder 10 is not limited.

In some embodiments, the main material feeder 10 includes a rotary valve, and an inner wall of the rotary valve is provided with a non-metal protective layer, where the non-metal protective layer includes silicon carbide material; and the main material conveying pipe 11 is made of stainless steel material, and an inner wall of the main material conveying pipe 11 is provided with an alumina ceramic ring.

Specifically, the rotary valve is a structure that conveys main materials into the main material conveying pipe 11 through a rotating component. The non-metal protective layer is a structure without metal properties. The rotary valve can be a metal part, and the inner wall of the rotary valve is provided with a non-metal protective layer, that is, the non-metal protective layer can isolate the main materials from the metal substances of the rotary valve. Silicon carbide material has good wear resistance and high thermal conductivity, and cannot be damaged during collision and friction with the main materials, thereby reducing the probability of the main materials contacting the metal substances of the rotary valve.

Certainly, the non-metal protective layer can also include other non-metal materials, which is not limited here.

Exemplarily, the rotary valve can include a valve body and an impeller provided in the valve body. The impeller rotates in the valve body to convey the main materials to the main material conveying pipe 11, and non-metal protective layers can be provided on the inner wall of the valve body and the impeller.

The stainless steel material used for the main material conveying pipe 11 can be 304 stainless steel material or other types of stainless steel materials. Certainly, the main material conveying pipe 11 can also use other metal materials. The alumina ceramic ring is a structure without metal properties, which can isolate the main materials from the metal substances of the main material conveying pipe 11. The alumina ceramic ring has high hardness and good wear resistance, and cannot be damaged during collision and friction with the main materials, thereby reducing the probability of the main materials contacting the metal substances of the main material conveying pipe 11.

Certainly, other non-metal structures can also be provided on the inner wall of the main material conveying pipe 11, which is not limited here.

It can be understood that during feeding of the rotary valve and the main material conveying pipe 11, the powder in the rotary valve inevitably frictionally collides with the rotary valve and the main material conveying pipe 11. In the related art, the rotary valve and the main material conveying pipe 11 are made of metal materials, which inevitably contain some active metals, such as iron, chromium, nickel, copper, or zinc, thereby causing the main materials to be mixed with metal impurities after they pass through the rotary valve and the main material conveying pipe 11, affecting the qualification rate of the battery slurry.

In this embodiment, the inner wall of the rotary valve is provided with a non-metal protective layer, and the inner wall of the main material conveying pipe 11 is provided with an alumina ceramic ring. When the main materials pass through the rotary valve and the main material conveying pipe 11, the non-metal protective layer isolates the main materials from the metal substances of the rotary valve, and the alumina ceramic ring isolates the main materials from the metal substances of the main material conveying pipe 11. In this way, during the process that the main materials are conveyed to the main material storage bin 12 after impurity filtering by the first filtering unit 70, no new impurities are added, thereby ensuring the purity of the main materials in the main material storage bin 12 and increasing the production qualification rate of the battery slurry.

It can be understood that in some examples, the inner wall of the main material storage bin 12 is also provided with a non-metal protective layer to further ensure the purity of the main materials.

The specific structure of the first filtering unit 70 is not limited.

In some embodiments, the first filtering unit 70 includes an iron remover.

The iron remover is a structure capable of generating strong magnetic field attraction, which can remove magnetic impurities and metal impurities mixed in the main materials to increase the purity of the main materials.

In some embodiments, the auxiliary material feeding system 2 includes an auxiliary material feeder 20, an auxiliary material conveying pipe 21, and an auxiliary material storage bin 22. The filtering unit 7 includes a second filtering unit 71. The auxiliary material feeder 20 is configured to convey auxiliary materials to the auxiliary material storage bin 22 via the auxiliary material conveying pipe 21, and the second filtering unit 71 is provided between the auxiliary material feeder 20 and the auxiliary material conveying pipe 21.

Specifically, after the auxiliary material powder bag is unpacked, the auxiliary materials in the auxiliary material powder bag can be conveyed to the auxiliary material storage bin 22 for storage through the auxiliary material feeder 20 via the auxiliary material conveying pipe 21. The second filtering unit 71 filters impurities mixed in the auxiliary materials themselves before the auxiliary materials enter the auxiliary material conveying pipe 21, so that the impurity content in the auxiliary materials entering the auxiliary material storage bin 22 is low.

In this embodiment, the arrangement of the second filtering unit 71 filters the auxiliary materials before the auxiliary materials enter the auxiliary material conveying pipe 21, increases the purity of the auxiliary materials entering the auxiliary material conveying pipe 21 and the auxiliary material storage bin 22, and reduces the probability that impurities mixed in the auxiliary materials enter the auxiliary material conveying pipe 21 and the auxiliary material storage bin 22 to affect the purity of the auxiliary materials, so that the auxiliary materials have relatively high purity during the conveying process, increasing the qualification rate of the battery slurry prepared by the slurry making machine 50.

Certainly, in some other embodiments, the second filtering unit 71 can also be provided between the auxiliary material storage bin 22 and the auxiliary material conveying pipe 21, or between the auxiliary material storage bin 22 and the mixing bin 40. In still some other embodiments, structures having filtering functions can be provided on at least two of the following connections: between the auxiliary material feeder 20 and the auxiliary material conveying pipe 21, between the auxiliary material storage bin 22 and the auxiliary material conveying pipe 21, and between the auxiliary material storage bin 22 and the mixing bin 40, further improving the purity of the auxiliary materials.

The specific structure of the auxiliary material feeder 20 is not limited.

In some embodiments, the auxiliary material feeder 20 includes a suction gun, and an outer surface of the suction gun is provided with a non-metal protective layer, where the non-metal protective layer includes Teflon material; and the auxiliary material conveying pipe 21 is made of stainless steel material, and an inner wall of the auxiliary material conveying pipe 21 is provided with a polyethylene sintered tube.

Specifically, the suction gun is a structure that sucks auxiliary materials into the auxiliary material conveying pipe 21 by vacuum suction. The non-metal protective layer is a structure without metal properties. The outer wall of the suction gun can be made of metal material, and the outer surface of the suction gun is provided with a non-metal protective layer, that is, the non-metal protective layer can isolate the auxiliary materials from the metal substances of the suction gun. Teflon material has good wear resistance and is not easily permeable, and cannot be damaged during collision and friction with the auxiliary materials, thereby reducing the probability of the auxiliary materials contacting the metal substances of the suction gun.

Certainly, the non-metal protective layer can also include other non-metal materials, which is not limited here.

The stainless steel material used for the auxiliary material conveying pipe 21 can be 304 stainless steel material or other stainless steel materials. Certainly, the auxiliary material conveying pipe 21 can also use other metal materials. The polyethylene sintered tube can isolate the auxiliary materials from the metal substances of the auxiliary material conveying pipe 21, and the polyethylene sintered tube itself has micropores, through which air can be continuously introduced between the auxiliary material conveying pipe 21 and the polyethylene sintered tube, thereby forming an air film on the surface of the polyethylene sintered tube. In this way, it facilitates the flow of auxiliary materials in the auxiliary material conveying pipe 21, reduces friction, and reduces the probability of the auxiliary materials contacting the metal substances of the auxiliary material conveying pipe 21.

Certainly, other non-metal structures can also be provided on the inner wall of the auxiliary material conveying pipe 21, which is not limited here.

It can be understood that during feeding of the suction gun and the auxiliary material conveying pipe 21, the suction gun is inserted into the auxiliary material powder bag, and the suction port of the suction gun is surrounded by dense powder. The auxiliary materials are sucked away into the auxiliary material conveying pipe 21 through negative pressure. During this process, the outer surface of the suction gun and the auxiliary material conveying pipe 21 inevitably frictionally collide with the auxiliary materials. In the related art, the outer wall of the suction gun and the auxiliary material conveying pipe 21 are made of metal materials, which inevitably contain some active metals, such as iron, chromium, nickel, copper, or zinc, thereby causing the auxiliary materials to be mixed with metal impurities after they pass through the suction gun and the auxiliary material conveying pipe 21, affecting the qualification rate of the battery slurry.

In this embodiment, the outer surface of the suction gun is provided with a non-metal protective layer, and the inner wall of the auxiliary material conveying pipe 21 is provided with a polyethylene sintered tube. When the auxiliary materials pass through the suction gun and the auxiliary material conveying pipe 21, the non-metal protective layer isolates the auxiliary materials from the metal substances of the suction gun, and the polyethylene sintered tube isolates the auxiliary materials from the metal substances of the auxiliary material conveying pipe 21. In this way, during the process that the auxiliary materials are conveyed to the auxiliary material storage bin 22 after impurity filtering by the second filtering unit 71, no new impurities are added, thereby ensuring the purity of the auxiliary materials in the auxiliary material storage bin 22 and increasing the production qualification rate of the battery slurry.

It can be understood that in some examples, the inner wall of the auxiliary material storage bin 22 is also provided with a non-metal protective layer to further ensure the purity of the auxiliary materials.

The specific structure of the second filtering unit 71 is not limited.

In some embodiments, the second filtering unit 71 includes a filter screen, and the filter screen is disposed on the suction gun.

The filter screen can remove particle agglomerates mixed in the auxiliary materials to increase the purity of the auxiliary materials. The filter screen is provided on the suction gun, specifically, it can be provided at the suction port of the suction gun to filter impurities in the auxiliary materials during suction.

The filter screen can be provided with multiple filter screen holes, and the filter screen holes can be circular holes, square holes or other shapes. Exemplarily, the diameter of the circular hole can be 10 mm, and the length of the square hole can be 10 mm and the width can be 10 mm.

In some embodiments, the battery slurry production system 100 includes a solvent feeding system 3 configured to store and convey the solvent. An output end of the solvent feeding system 3 is in communication with an input end of the slurry making machine 50, and the solvent feeding system 3 is provided with a third filtering unit 72.

Specifically, the solvent enters the slurry making machine 50 through the solvent feeding system 3 and meets the mixture of the main materials and the auxiliary materials in the slurry making machine 50, and then they are mixed under the action of the slurry making machine 50 to form battery slurry.

It can be understood that impurities are inevitably mixed in the solvent during storage or preparation, and affect the qualification rate of the battery slurry after entering the slurry making machine 50.

In this embodiment, before the solvent enters the slurry making machine 50, the third filtering unit 72 filters impurities mixed in the solvent, so that the impurity content in the solvent entering the slurry making machine 50 is low, thereby the qualification rate of the battery slurry prepared by the slurry making machine 50 is also relatively high, the filtering pressure and filtering difficulty during downstream battery slurry conveying are reduced, the qualification rate of the battery slurry is increased, and the safety performance of the battery is improved.

In some embodiments, referring to FIG. 1, the solvent feeding system 3 includes a solvent storage bin 31 and a solvent feeder 30. The solvent feeder 30 is configured to convey solvents to the solvent storage bin 31, and the third filtering unit 72 is provided between the solvent storage bin 31 and the solvent feeder 30.

In this embodiment, the third filtering unit 72 filters impurities mixed in the solvent itself when the solvent enters the solvent storage bin 31, and increases the purity of the solvent entering the solvent storage bin 31, so that the solvent has relatively high purity in the slurry making machine 50, and increases the qualification rate of the battery slurry prepared by the slurry making machine 50.

The specific structure of the third filtering unit 72 is not limited.

In some embodiments, the third filtering unit 72 includes a wound filter.

A filtration rating of the wound filter ranges from 0.22 µm to 75 µm, for example, 0.22 µm, 1 µm, 5 µm, 11 µm, 19 µm, 25 µm, 30 µm, 42 µm, 48 µm, 50 µm, 57 µm, 64 µm, or 75 µm.

The filtration rating of the wound filter refers to the size of the largest particles allowed to pass when the solvent containing impurities passes through the wound filter.

Specifically, when the solvent contacts the outer surface of the wound filter, the particle impurities mixed therein are blocked outside the wound filter to increase the purity of the solvent.

It can be understood that the filtration rating of the wound filter can be selected according to the viscosity of the solvent. When the viscosity of the solvent is relatively large, the fluidity of the solvent is relatively poor, and a wound filter with larger filtration rating can be selected, for example, a wound filter with filtration rating of 75 µm; when the viscosity of the solvent is relatively small, the fluidity of the solvent is good, and a wound filter with smaller filtration rating can be selected, for example, a wound filter with filtration rating of 0.22 µm.

In some embodiments, the slurry making machine 50 includes a driving mechanism and a stirring mechanism. The driving mechanism is configured to drive the stirring mechanism to rotate, and the driving mechanism and the stirring mechanism are made of non-metal materials.

Specifically, during the preparation of battery slurry, the driving mechanism drives the stirring mechanism to rotate, stirring the main materials, auxiliary materials and solvents in the slurry making machine 50, to fully mix, infiltrate, and disperse them, thereby forming a battery slurry.

The stirring mechanism can include stirring members such as stirring rods and stirring paddles.

It can be understood that during the preparation of battery slurry, the driving mechanism and the stirring mechanism inevitably frictionally collide with the battery slurry. In the related art, the driving mechanism and the stirring mechanism are made of metal materials, which inevitably contain some active metals, such as iron, chromium, nickel, copper, or zinc, thereby causing metal impurities to be mixed in the generated battery slurry, affecting the qualification rate of the battery slurry.

In this embodiment, the driving mechanism and the stirring mechanism are made of non-metal materials, which can reduce the probability of metal impurities being mixed during the battery slurry production process, so that the qualification rate of the produced battery slurry is high, and the filtering pressure in the downstream battery slurry conveying process is reduced.

In some other embodiments, the driving mechanism and the stirring mechanism are made of metal materials and provided with a non-metal protective layer, where the metal materials include aluminum alloy materials, and the non-metal protective layer includes silicon carbide materials.

In this embodiment, during the battery slurry production process, the non-metal protective layer isolates the battery slurry from the metal substances. In this way, after the battery slurry is prepared in the slurry making machine 50, no new impurities are added, and the qualification rate of the battery slurry is high.

It can be understood that the driving mechanism can include a stator and a rotor, and the stator and rotor can be made of metal materials and provided with a non-metal protective layer.

The driving mechanism can also include a transmission belt, and the transmission belt is made of rubber material, which does not contain metal materials inside.

Certainly, the inner wall of the slurry making machine 50 can also be made of metal materials and provided with a non-metal protective layer, so that the parts in the slurry making machine 50 that directly contact the battery slurry do not contain metal substances.

In some embodiments, the battery slurry production system 100 includes a coating buffer tank 60, an outlet end of the coating buffer tank 60 is connected to a coating die head, the coating die head is configured to apply the slurry to electrode plates of batteries, and at least a fourth filtering unit 73 is provided between the coating buffer tank 60 and the slurry making machine 50.

In this embodiment, during the conveying process of the battery slurry, the fourth filtering unit 73 filters particle agglomerates mixed in the battery slurry to remove large particle impurities in the battery slurry, and increases the qualification rate of the battery slurry, and after the main materials, auxiliary materials, and solvents are all filtered, the filtering pressure of the battery slurry during the conveying process is low, and the conveying efficiency can also be increased.

In some embodiments, the fourth filtering unit 73 is a wound filter.

The filtration rating of the wound filter ranges from 100 µm to 150 µm, for example, 100 µm, 105 µm, 110 µm, 114 µm, 120 µm, 123 µm, 129 µm, 131 µm, 137 µm, 140 µm, 145 µm, or 150 µm.

The filtration rating of the wound filter refers to the size of the largest particles allowed to pass when the solvent containing impurities passes through the wound filter.

Specifically, when the battery slurry contacts the outer surface of the wound filter, the particle impurities mixed therein are blocked outside the wound filter to increase the purity of the solvent.

In some embodiments, the battery slurry production system 100 includes a first transfer tank 61 and a fifth filtering unit 74. The first transfer tank 61 is provided between the fourth filtering unit 73 and the fifth filtering unit 74, and the coating buffer tank 60 is provided downstream of the fifth filtering unit 74 along a conveying direction of the battery slurry.

In this embodiment, the first transfer tank 61 can increase the storage capacity for the battery slurry during the conveying process of the battery slurry, and the fifth filtering unit 74 can further filter impurities mixed in the battery slurry again, increasing the filtering effect of the battery slurry, thereby increasing the coating reliability.

In some embodiments, the battery slurry production system 100 includes a second transfer tank 62 and a sixth filtering unit 75. The second transfer tank 62 is provided between the fifth filtering unit 74 and the sixth filtering unit 75, and the coating buffer tank 60 is connected to an outlet end of the sixth filtering unit 75.

In this embodiment, the second transfer tank 62 can increase the storage capacity for the battery slurry during the conveying process of the battery slurry, and the sixth filtering unit 75 can remove impurities from the battery slurry again, that is, during the conveying process of the battery slurry, the battery slurry undergoes at least three filtrations, the purity of the battery slurry is high, and the safety performance of the battery is increased.

The specific structures of the fifth filtering unit 74 and the sixth filtering unit 75 are not limited.

In some embodiments, the fifth filtering unit 74 includes an iron remover; and/or the sixth filtering unit 75 includes an iron remover.

Before the battery slurry is conveyed to the coating buffer tank 60, the fifth filtering unit 74 and the sixth filtering unit 75 filter possible magnetic impurities and metal impurities mixed in the battery slurry, so that the battery slurry entering the coating buffer tank 60 contains no or almost no impurities.

The above embodiments are only used to illustrate the technical solutions of this disclosure and are not intended to limit them. Although this disclosure has been described in detail with reference to the foregoing embodiments, those of ordinary skill in the art should understand that modifications can still be made to the technical solutions recorded in the foregoing embodiments, or equivalent replacements can be made to some or all of the technical features therein. These modifications or replacements do not make the essence of the corresponding technical solutions depart from the scope of the technical solutions of the embodiments of this disclosure, and they should all be covered within the scope of this disclosure. In particular, as long as there is no structural conflict, the various technical features mentioned in the various embodiments can be combined in any manner. This disclosure is not limited to the specific embodiments disclosed in the text, but includes all technical solutions falling within the scope of this disclosure.

### Industrial applicability

The battery slurry production system provided by the embodiments of this disclosure filters impurities mixed in the production process of the main materials and/or auxiliary materials by the filtering unit before they enter the mixing bin, allowing for low impurity content in the main materials and/or auxiliary materials entering the slurry making machine, such that the qualification rate of the battery slurry prepared by the slurry making machine is also relatively high, the filtering pressure and filtering difficulty during downstream battery slurry conveying are reduced, the qualification rate of the battery slurry is increased, and the safety performance of the battery is improved.

## Claims

1. A battery slurry production system, comprising:
a main material feeding system configured to store and convey main materials, wherein the main materials comprise active materials, and the active materials are battery positive electrode active materials or battery negative electrode active materials;
an auxiliary material feeding system configured to store and convey auxiliary materials, wherein the auxiliary materials comprise binders and conductive agents;
a mixing bin, an input end of the mixing bin being in communication with both an output end of the main material feeding system and an output end of the auxiliary material feeding system, and being configured to receive the main materials and the auxiliary materials, and to mix the main materials and the auxiliary materials; and
a slurry making machine, an input end of the slurry making machine being in communication with the output end of the mixing bin, and being configured to generate a battery slurry from a mixture of the main materials and the auxiliary materials and a solvent,
wherein at least one of the main material feeding system and the auxiliary material feeding system is provided with a filtering unit.

2. The battery slurry production system according to claim 1, wherein the main material feeding system comprises a main material feeder, a main material conveying pipe, and a main material storage bin, and the filtering unit comprises a first filtering unit, wherein the main material feeder is configured to convey the main materials to the main material storage bin via the main material conveying pipe, and the first filtering unit is provided between the main material feeder and the main material conveying pipe.

3. The battery slurry production system according to claim 2, wherein:
the main material feeder comprises a rotary valve, wherein an inner wall of the rotary valve is provided with a non-metal protective layer; and
the main material conveying pipe is made of stainless steel material, wherein an inner wall of the main material conveying pipe is provided with an alumina ceramic ring.

4. The battery slurry production system according to claim 3, wherein the non-metal protective layer is made of silicon carbide material.

5. The battery slurry production system according to any one of claims 2 to 4, wherein the first filtering unit comprises an iron remover.

6. The battery slurry production system according to claim 1, wherein the auxiliary material feeding system comprises an auxiliary material feeder, an auxiliary material conveying pipe, and an auxiliary material storage bin, and the filtering unit comprises a second filtering unit, wherein the auxiliary material feeder is configured to convey auxiliary materials to the auxiliary material storage bin via the auxiliary material conveying pipe, and the second filtering unit is provided between the auxiliary material feeder and the auxiliary material conveying pipe.

7. The battery slurry production system according to claim 6, wherein:
the auxiliary material feeder comprises a suction gun, wherein an outer surface of the suction gun is provided with a non-metal protective layer; and
the auxiliary material conveying pipe is made of stainless steel material, wherein an inner wall of the auxiliary material conveying pipe is provided with a polyethylene sintered tube.

8. The battery slurry production system according to claim 7, wherein the non-metal protective layer is made of Teflon material.

9. The battery slurry production system according to claim 7, wherein the second filtering unit comprises a filter screen, and the filter screen is provided on the suction gun.

10. The battery slurry production system according to claim 1, wherein the battery slurry production system comprises a solvent feeding system configured to store and convey the solvent, wherein an output end of the solvent feeding system is in communication with the input end of the slurry making machine, and the solvent feeding system is provided with a third filtering unit.

11. The battery slurry production system according to claim 10, wherein the solvent feeding system comprises a solvent storage bin and a solvent feeder, wherein the solvent feeder is configured to convey solvents to the solvent storage bin, and the third filtering unit is provided between the solvent storage bin and the solvent feeder.

12. The battery slurry production system according to claim 10 or 11, wherein the third filtering unit comprises a wound filter having a filtration rating of 0.22 µm to 75 µm.

13. The battery slurry production system according to claim 1, wherein the slurry making machine comprises a driving mechanism and a stirring mechanism, wherein the driving mechanism is configured to drive the stirring mechanism to rotate, and the driving mechanism and the stirring mechanism are made of non-metal materials, or the driving mechanism and the stirring mechanism are made of metal materials and provided with a non-metal protective layer.

14. The battery slurry production system according to claim 13, wherein the metal materials are aluminum alloy, and the non-metal protective layer is made of silicon carbide material.

15. The battery slurry production system according to any one of claims 1 to 4, 6 to 11, 13 or 14, wherein the battery slurry production system comprises a coating buffer tank, wherein an outlet end of the coating buffer tank is connected to a coating die head configured to apply the slurry to electrode plates of batteries, and at least a fourth filtering unit is provided between the coating buffer tank and the slurry making machine.

16. The battery slurry production system according to claim 15, wherein the fourth filtering unit is a wound filter having a filtration rating of 100 µm to 150 µm.

17. The battery slurry production system according to claim 15, wherein the battery slurry production system comprises a first transfer tank and a fifth filtering unit, wherein the first transfer tank is provided between the fourth filtering unit and the fifth filtering unit, and the coating buffer tank is provided downstream of the fifth filtering unit along a conveying direction of the battery slurry.

18. The battery slurry production system according to claim 17, wherein the battery slurry production system comprises a second transfer tank and a sixth filtering unit, wherein the second transfer tank is provided between the fifth filtering unit and the sixth filtering unit, and the coating buffer tank is connected to an outlet end of the sixth filtering unit.

19. The battery slurry production system according to claim 18, wherein the fifth filtering unit comprises an iron remover, and/or the sixth filtering unit comprises an iron remover.
